# EUROPEAN PATENT SPECIFICATION

(11) **EP 1 901 151 B1**
(45) Date of publication and mention of the grant of the patent: **24.02.2010**
(21) Application number: 06120621.5
(22) Date of filing: 14.09.2006
(51) Int. Cl.: G05B 19/4061, B25J 9/16

(54) **A method and a device for avoiding collisions between an industrial robot and an object**
Verfahren und Vorrichtung zur Vermeidung von Kollisionen zwischen einem Industrieroboter und einem Objekt
Procédé et dispositif permettant d'éviter les collisions entre un robot industriel et un objet

(43) Date of publication of application: 19.03.2008
(73) Proprietor: ABB Research Ltd., 8050 Zürich (CH)
(72) Inventor: Sköld, Susanne, 722 23 Västerås (SE); Lemarinier, Pavel, 723 45 Västerås (SE); Strandberg, Morten, 722 28 Västerås (SE); Krieger, Roland, 68526 Ladenburg (DE)
(74) Representative: Reyier, Ann-Mari

(56) References cited:
- EP-A- 1 604 790
- EP-A2- 0 415 067
- DE-A1- 19 625 637
- US-A- 5 227 707
- US-A1- 2001 004 718
- US-B1- 6 212 444

## Description

### FIELD OF THE INVENTION

The present invention relates to a method and a device for avoiding collisions between components of a multi-axial industrial robot and at least one other moving object.

### PRIOR ART

A problem in connection with industrial robots is how to prevent collisions between the robot and objects belonging to the same work cell as the robot. An object can be a physical part or an assembly of parts constituting a solid. Different types of objects may co-exist in the robot work cell. The object can either be moving or stationary. Moving objects are, for example, mechanical units such as robots, external axes of the robot, and positioners.

Interferences due to proximity of objects in the work cell or intersecting trajectories need to be avoided. Relatively high speed used during production phase could otherwise result in severe damage to the work cell objects and downtime in production if a collision were to happen. The trajectories of moving objects in a robot work cell are often well known in advance. However, trajectories of the said moving objects can not always be known exactly in advance, most often as a result of non-deterministic processes, such as spot-welding or the of use of sensor-data. Path changes may then occur either due to unpredictable delays of the process or sensor corrections of robot trajectories. Unpredicted path changes may also occur as a result of drifts.

Various programming errors can also lead to collisions. Even though modified robot programs may appear collision-free, collisions may still occur later in production phase due to errors that did not manifest themselves earlier.

The permanent demand on higher production capacities at lower cost has further lead to the development of new automation concepts based on multi-robot systems. Despite efforts from robots manufacturers to design easy-to-use multi-robot solutions, the numerous degrees of freedom enabled by such systems have been accompanied by an increased risk of collisions.

Over the past twenty years several approaches based on different technologies and concepts have been proposed to prevent collisions between objects belonging to the same robot work cell. For example, US6 212 444, proposes to set a common area in which an operating area of a robot and an operating area of an apparatus, such as another multi-axial robot performing an operation cooperatively with the robot, overlap each other. A first entrance-forbidding signal is output to the apparatus forbidding it to enter the common area when a predetermined reference point on the robot is within the common area, and a second entrance-forbidding signal is output to the robot forbidding any reference point of the robot to enter the common area when the movable part of the apparatus is within the common area. According to the disclosed method, the other moving object is forbidden to enter the common area if a predetermined reference point, usually located at the tip of the mechanical arm of the robot or at its joints, is within the common area. Reciprocally, according to the disclosed method, a reference point on the robot is forbidden to enter the common area if the other moving object, is within the common area. A shortcoming with the disclosed method is that other parts of the robot, which do not contain a reference point, are allowed to enter the common area, even though it is occupied with another moving object, whereby a risk of collision arises.

In US1993-5247608, dynamic control of the motion of a plurality of robots is accomplished by checking for interference between bounding boxes established by the sweeping volumes of each of the robots along their respective programmed path segments, their incremental portion being at least as long as the distance required for the robots to stop.

It has also been proposed to use protective zones enclosing directly the moving objects or parts of the objects instead of their sweeping areas. Usually, the protective zones surround the mechanical arms of the robot and/or its tool. Examples of protective zones have been described in the following patent documents: US2005/0090930, US2004-0249508, JP2003-334777, and JP08-141978.

US2005/0090930 describes a method where protective zones having the shape of rectangular parallelepipeds are attached around machine parts. Interferences between the machine parts are checked by an algorithm, which judges whether the rectangular parallelepipeds overlap.

In US2004-0249508, predicted positions of at least two three-dimensional spatial regions on a robot, which are obtained by trajectory calculations, are matched with a virtual safety barrier. If any part of the predicted positions of the three-dimensional spatial regions is included in the safety barrier, a control to stop the movement of the arms of the robot including any one of the three-dimensional regions is ordered.

In JP2003-334777 protective envelops are used to model bodies of moving objects, whose positions are recorded together with their closest inter-distance at the positions, as well as size extensions of the envelops of the moving objects as functions of their speed. An interpolation of the recorded distances, together with at least one predicted distance, is accomplished and the minimum of the obtained interpolation curve is compared with the sum of the thicknesses of the envelops of the objects of concern. In JP08-141978 is described a method where a double protective envelop is used around robot tools.

EP1604790 discloses a method for avoiding collisions between a plurality of robots. A number of three-dimensional soft zones is defined, each enclosing a common area in which an operating area of the robots overlap each other. Three-dimensional hard zones are defined for and attached to the robots. It is determined whether any part of a hard zone of a robot is located within to the soft zone, and if any part of the hard zone of the robot is within the soft zone, the robot is forbidden entrance to the soft zone if a part of a hard zone of the other robots is already within the soft zone.

### OBJECTS AND SUMMARY OF THE INVENTION

The object of the present invention is to provide an improved method and device for avoiding collisions, which reduce the risk of collisions between moving objects.

According to one aspect of the invention this object is achieved by a method as defined in claim 1.

A soft zone is a defined volume enclosing an area within which only one moving object is allowed to visit at a time. When the soft zone is occupied with a moving object, another moving object, which is programmed to enter the soft zone, is stopped and kept waiting until the zone is unoccupied before it is allowed to enter the zone. The soft zone may contain a workpiece, or a part of the workpiece, to be worked on by a plurality of robots. For example, all the characteristics of the soft zone can be defined by programming instructions or by loading predefined files to a robot control unit.

According to the invention, the hard zones are three-dimensional. A hard zone can be defined as a volume of arbitrary geometry enclosing the whole or a part of a robot or a movable object in order to protect it from collisions with other movable or stationary object. For example, hard zones may surround the mechanical arms of the robot and the tool, or the workpiece, carried by the robot. A hard zone can also be defined as a surface area of arbitrary geometry meant to act as a shield. The hard zones are attached to the robot or the moving object, which means that they follow the movement and orientation of the robot or object. A hard zone can also be designed to protect a tool hold by the robot, and is then attached to the tool or to the tool holder of the robot. As long as the robot holds the tool, the hard zone will follow the movement and orientation of the robot.

By determining whether any part of the hard zones is located within the soft zone, it is possible to monitor when the robot, or the other object, enters and leaves the common area. As it is monitored when a volume enclosing at least a part of the object or a surface area attached to the object, or a shield extending in two dimensions, not only a reference point as in the prior art, enters into the soft zone, the detection of when the robot or the object enters the common area is improved. By enclosing all critical parts of the robot and the other movable object with one or more tree-dimensional hard zones, or a plurality of two-dimensional zones it is possible to avoid that any part of the robot or the object, for instance, the elbow of the robot, enters an occupied soft zone.

According to an embodiment of the invention, the method comprises estimating the shortest distances between the hard zones and the surface of the soft zone and based thereon determining whether any part of the hard zones is located within to the soft zone. By monitoring the shortest distances between the hard zones and the surface of a soft zone, it is possible to detect when the robot, or the other object, enters or leaves the common area. The shortest distance method makes it possible to detect when a hard zone of an arbitrary and complicated shape enters the common area. Thus, this embodiment makes it possible to have a soft zone of any 3-dimensional geometrical shape and any orientation. In practice, the performance of the interference detection algorithm may, however, impose the shape of the geometry to be convex.

According to an embodiment of the invention, the method comprises: defining a plurality of three-dimensional hard zones attached to the robot, defining a plurality of three-dimensional hard zones attached to the object, forbidding the robot entrance to the soft zone if any part of the hard zones of the object is within the soft zone, and forbidding the movable object entrance to the soft zone if any part of the hard zones of the robot is within the soft zone. It is easier to define simple geometries for parts of an object than for the whole object. It can also be advantageous to define more than one hard zone per moving object, if the moving object includes several components movable relative to each other, such as the arms of a multi-axial robot. If simpler geometries are used for the hard zones, the computation of the current positions of the hard zones will be simplified.

According to the invention, the method comprises grouping the hard and/or soft zones into at least two different categories such that at least two of the zones belong to the same category. The zones can be grouped together such that at least two hard zones, or at least two soft zones, or at least one hard and at least one soft zone belong to the same category. The grouping of zones into categories is advantageous since it enables a common treatment of a group of zones, for instance to allow the entrance of a moving object protected by several hard zones into a soft zone when one of the hard zones is already occupying the soft zone; or to modify the speed of a moving object if one of its hard zones is within/beyond a predefined critical distance to another object; or when process information generated by a zone in the form of a binary encoded signal should be gathered by a supervisor for the process monitoring of several zones.

According to the invention, the method comprises activating zones of the same category at the same time and deactivating zones of the same category at the same time. By activation of a zone is meant that the zone is taken into use and thus is considered with regard to collisions. A deactivated zone is not in use and is treated as if it did not exist. In many situations it can be advantageous to be able to simultaneously activate and deactivate soft as well as hard zones. For example, in production mode, some zones are only used on certain robot paths (e.g. service trajectories) involving different mechanical units in combination with a given size of tool and/or workpiece. The CPU load on a robot controller or a separate collision avoidance device can thus be reduced by deactivating zones that temporarily need not participate to an application process. Deactivated zones that need not be used anymore can further be erased from the memory of a robot controller or that of a separate collision avoidance device by robot command during robot program execution, hence reducing memory space consumption.

According to an embodiment of the invention, the method comprises enclosing each of a plurality of exchangeable robot tools or workpieces with one or more hard zones, assigning the same category to hard zones belonging to the same tool, and assigning different categories to hard zones belonging to different tools. This embodiment is, for example, advantageous, in an application where the robot changes between pluralities of different tools with different shapes during a work cycle. Thus, it is possible to simultaneously activate the hard zones of the tool presently used by the robot, and to deactivate the hard zones of the tools that are not in use at the moment. Similarly, it is possible to simultaneously activate soft zones corresponding to different working areas on a workpiece being carried by the robot or another moving object, and to deactivate those zones when the workpiece is conveyed outside the work cell of the robot.

According to an embodiment of the invention, the method comprises making a reservation in advance of the soft zone, for one of the moving objects, and forbidding the other moving object entrance to the soft zone as long as the soft zone is reserved. A multi-axial robot is, of course, also to be considered as a moving object. Preferably, the reservation is withdrawn as soon as the object with the reservation has left the soft zone. This embodiment makes it possible to temporarily give one of the moving objects a higher priority to the soft zone than the other moving objects. If a soft zone has been reserved for a moving object, the other objects are not allowed to enter the soft zone, even though it is empty. This embodiment is, for example, advantageous in applications in which it is important that a certain movement is not interrupted.

According to an embodiment of the invention, at least a part of the robot or the object is moving relative to its surroundings and the soft zone is moving in a corresponding manner. A moving soft zone is useful, for instance, in an application including a plurality of robots working on components being transported on a conveyor, and the robots are linearly moving on a same track-motion along the conveyor. Such situations are often encountered in e.g. painting or dispensing processes inside car bodies where two process robots operating through different openings of the car-body may interfere with each other during their movements. Attaching a moving soft zone onto the components, or a part of them, can hence prevent collision between the robots working on the moving components. This example can be generalized to all cases involving the displacement of a workpiece by a moving object such as a robot or an axis positioner, where at least one other robot is to work on the workpiece being displaced.

According to an embodiment of the invention, the method comprises: allowing a hard zone to keep moving at the boundaries and speed of an occupied soft zone if the latter is moving. This feature can be particularly useful in the case of two or more robots interfering with each other in their displacements along a moving workpiece. In such a case, stopping a robot or one of its components protected by a hard zone that has come in contact with an occupied moving zone could result in loss of cycle-time or a production stop. Examples of processes where such a feature can be advantageous are painting, dispensing and other body-in-white applications involving the access of at least one robot into a moving car-body along a conveyor among a plurality of robots.

According to an embodiment of the invention, the method comprises: setting a first variable including information on whether the soft zone is occupied or unoccupied, and forbidding the robot or the movable object entrance to the soft zone in dependence on the variable. The first variable is, for example, a signal or a flag. This variable is made accessible for all the robots and movable objects being supervised in order to avoid collisions. Thus, the same information is available for all the robots and movable objects and thereby faults due to different information can be avoided. This solution is simple and reduces the information to be handled compared to the prior art disclosing two entrance-forbidding signals.

According to an embodiment of the invention, the method comprises: setting a second variable including information on which one of the robot and the object is occupying the soft zone, and a third variable including information on whether or not the robot or the object is waiting for entering the soft zone. Optionally, the first, second and third variables are presented for a user.

According to an embodiment of the invention, the soft zone or any hard zone is enclosing at least a part of a workpiece, a tool or any other object, the method further comprises: automatically varying in time the shape of the soft or hard zone in dependence on the shape of the workpiece, the tool or any other object being enclosed. The term shape includes the contour as well as the size and dimensions of the zone. This feature enables to adapt the shape of a soft zone attached to a workpiece that has just been assembled with another workpiece and to enclose both parts into the same zone without having to create a new one for that purpose. The feature can also ensure that a hard zone around a tool will maintain an optimal protection depending on e.g. whether the tool is open or closed, filled or empty, etc. The feature can hence also contribute to maintaining the workspace area of a work-cell as large as possible at any time while offering a suitable protection for the object it encloses.

According to an embodiment of the invention, at least one of the hard zones is enclosing at least a part of a tool, and the method further comprises: receiving information on the status of the tool and automatically varying the shape of the zone in dependence on the status of the tool. This embodiment ensures that a hard zone around a tool will maintain an optimal protection depending on e.g. whether the tool is open or closed, filled or empty, etc.

According to an embodiment of the invention, the method comprises converting a hard zone into a soft zone or converting a soft zone into a hard zone. This is, for example, advantageous during service operations, i.e. when a robot needs to present itself with a tool towards e.g. cleaning equipment involving physical contact between the tool and the equipment while both are initially protected respectively by say one hard zone. In that example, the cleaning operation can be completed by turning the hard zone of the equipment into a soft zone at the approach of the tool. By that means, collisions from other moving objects with the equipment can be prevented even during the service operation of the tool, as the soft zone of the equipment will lock itself as long as the tool occupies it. Another example is when two sub-parts of a workpiece need to be assembled by creating a controlled collision at low speed between e.g. one robot and another object. By turning the hard zone of one of the workpieces into a soft zone, the assembly operation can be completed while maintaining a protection between both workpieces. On the other hand, converting a soft zone into a hard one can be useful to protect common work-space areas between a moving object controlled by a robot controller and another moving object not directly controlled by the controller. These other moving objects can range from palletized boxes to smaller fixtures and other parts being transported on conveyor belts or automation chains. Their movements in robot work-cells are often driven by sensors transmitting signals to a monitoring PLC.

According to another aspect of the invention this object is achieved by a device for avoiding collisions between a multi-axial industrial robot and at least one other moving object as defined in claim 18.

According to an embodiment of the invention, the device comprises a human-machine interface that displays information on whether the soft zone is occupied or unoccupied, displays information on which one of the robot and the object is occupying the soft zone, and information on whether or not the robot or the object is waiting for entering the soft zone.

According to an embodiment of the invention, the device comprises means for removing the robot or the other moving object from queuing for entering an occupied soft zone. This embodiment provides the possibility to program an instruction or press a button into the human-machine interface in order to remove the robot or the other moving object from queuing for entering an occupied common area. This can be, for example, advantageous in a welding process. If a robot is stopped and put in a queue, waiting for entering the soft zone, the waiting time can be used for performing other tasks, such as cleaning the tip of the welding gun or the torch of an arc-welding gun.

According to an embodiment of the invention, the device comprises means for manually unlocking an occupied soft zone and thereby allowing entrance to the soft zone even though it is occupied. This embodiment provides the possibility, for example, to press a button into the human-machine interface in order to manually unlock an occupied common area. This is, for example, advantageous during error handling operations in case the restart of the production cycle of one or several stopped robots or other moving objects in a work-cell can be achieved fastest by allowing one or more hard zones to enter an occupied soft zone without deactivating the zones or completely turning off the collision avoidance system.

It is easy to realize that the method according to the invention, as defined in the appended set of method claims, is suitable for execution by a computer program having instructions corresponding to the steps in the inventive method when run on a processor unit.

According to a further aspect of the invention, the object is achieved by a computer program product directly loadable into the internal memory of a computer or a processor, comprising software code portions for performing the steps of the method according to the appended set of method claims, when the program is run on a computer.

According to another aspect of the invention, the object is achieved by a computer readable medium having a program recorded thereon, when the program is to make a computer perform the steps of the method according to the appended set of method claims, and the program is run on the computer.

### BRIEF DESCRIPTION OF THE DRAWINGS

The invention will now be explained more closely by the description of different embodiments of the invention and with reference to the appended figures.
- Fig. 1: shows an example of a robot work cell including two multi-axial robots working in a common area and a device for avoiding collisions according to an embodiment of the invention.
- Fig. 2: shows a flow chart illustrating an example of a method for avoiding collisions according to an embodiment of the invention.
- Fig. 3: shows a flow chart illustrating an example of how it is determined whether a robot or moving object will enter the common area.
- Fig. 4: shows a flow chart of illustrating an example of how it is determined whether a robot or moving object will leave the common area.
- Fig. 5: shows an example of a multi robot system using categories of zones.
- Figs. 6a-6b: illustrate an application for which it can be useful to use moving soft zones.
- Fig. 7: shows a variant of the flow chart of figure 2, when moving soft zones are used.
- Figs. 8a-d: show an example of how the shape of a hard zone can be varied in dependence on the shape of the object it encloses.
- Figs. 9a-b: show another example of how the shape of a hard zone can be varied in dependence on the shape of the object it encloses.
- Fig. 10: shows an example of two-dimensional hard zones.

### DETAILED DESCRIPTION OF PREFERRED EMBODIMENTS OF THE INVENTION

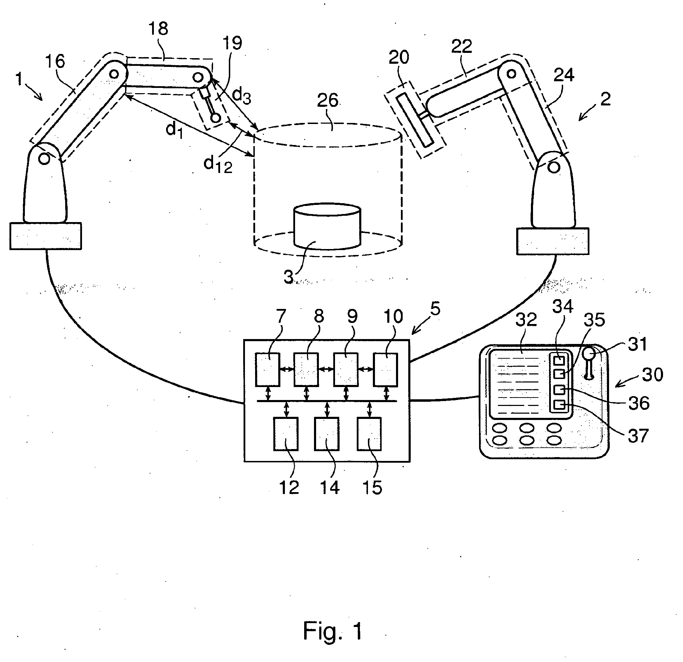

The invention will in the following be described in connection with a work cell including two movable objects, in this case two multi-axial robots 1,2, working on the same workpiece 3, as shown in figure 1. However, the collision avoidance device and method according to the invention can be used for any work cell including two or more moving objects, such as any combination of multi-axial robots, and other types of movable objects, such as positioners, track-motions, etc.

The robots 1,2 are connected to a common control unit 5. The control unit 5 is, for example, a conventional robot control system including necessary hardware, such as one or more processor units, memory means, input and output means, and software for carrying out normal robot control tasks. The control unit comprises a program storage means 7 for storing application programs comprising program instructions written in a robot language, a program executor 8 adapted to execute the stored application programs, and a path planner unit 9 adapted to receive instructions from the program executor 8 and on the basis thereof determine how the robot or robots should move in order to execute movement instructions of the application program. The path planner unit 9 plans how the instructed movement should be performed by carrying out an interpolation of the movement. The instructed movement is divided into a plurality of small increments. The joint angles for all axes of the robot are computed for each increment. For each interpolation step, the joint angles of the robot are computed for an increment. The joint angles are then converted into motor references. The path planner transmits the motor references to drive modules of the robot. The path of the robot is planned a specified time interval ahead of the current position of the robot. The control unit 5 also comprises a stop and resume unit 10 adapted, upon order, to stop the movement of the robot and upon order resumes the movement of the robot.

In this embodiment of the invention, a device for avoiding collisions between two or more movable objects, such as multi-axial industrial robots, is located in the control unit 5. The device for avoiding collisions comprises a memory 12 adapted to store data rendered by defining one or more three dimensional soft zones enclosing a common area in which operating areas of the moving objects overlap each other and data rendered by defining three-dimensional hard zones attached to the moving objects. The device for avoiding collisions further comprises a collision monitoring unit 14 adapted to determine whether any part of any of the hard zones of any of the moving object is located within the soft zone, and if that is the case, to forbid the other moving objects of the work cell entrance to the soft zone. The collision monitoring unit 14 is adapted to generate a stop signal to the robot if the robot is on its way to enter a soft zone occupied by the other robot.

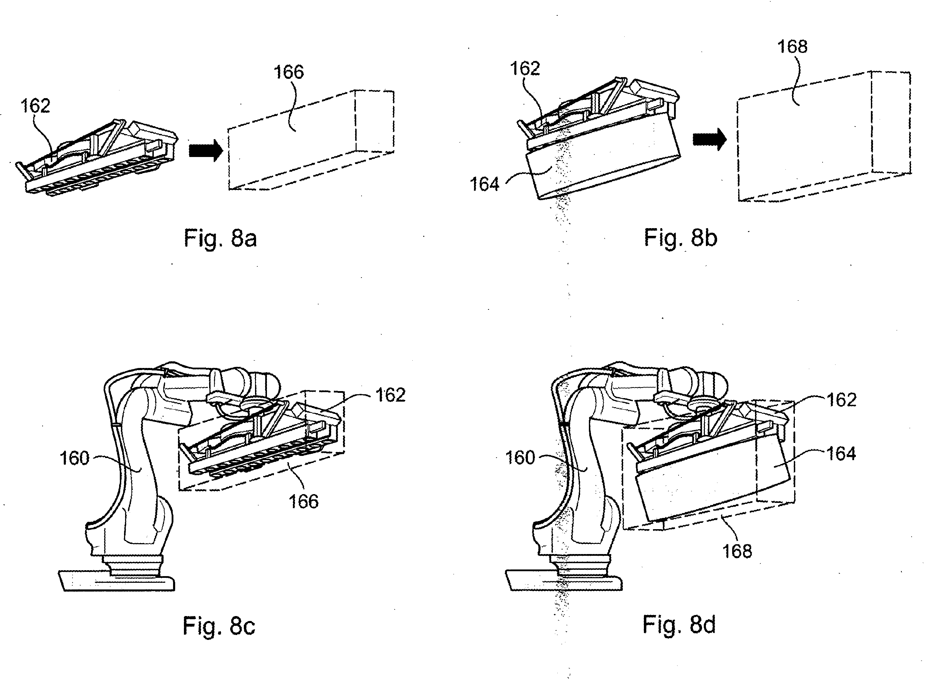

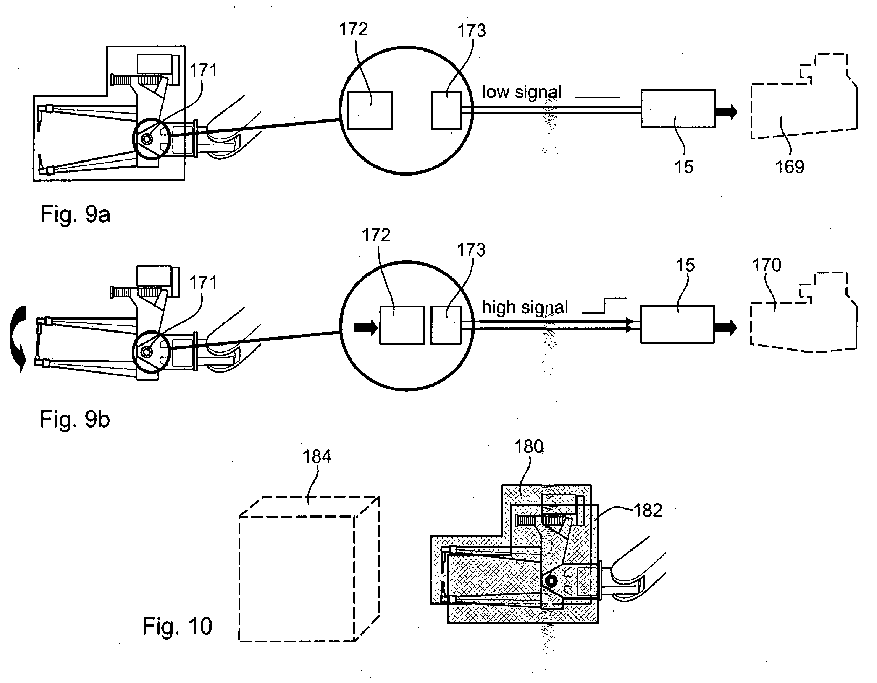

Optionally, the device may include a zone shape adaptation unit 15 designed to automatically varying in time the shape of the zone in dependence on the shape of the object being enclosed. This function will be described in more detail with reference to figures 8a-b and 9a-b.

For each robot 1,2, a plurality of hard zones 16,18,19,20,22,24 are defined. Preferably, the hard zones should enclose the parts of the robot that are likely to enter a soft zone. Soft zones are defined as volumes of arbitrary geometries. Hard zones can be three- or two-dimensional geometries of arbitrary shapes. The volumes can range from simple geometric primitives, such as cylinders, spheres and boxes, to more general representations such as complex polyhedron and triangulated surface patches. For example, simple CAD models of the zones can be loaded into the robot control unit and be used as soft and hard zones. Two-dimensional hard zones can be e.g. plane surface areas or truncated spheres. Three hard zones 16,18,19 are defined for the robot 1. The hard zones 16,18 enclose two mechanical arms of the robot, and the hard zone 19 encloses a tool carried by the robot. In the same way, three zones 20,22,24 are defined for the robot 2. A soft zone 26 encloses the common work area of the robots.

A portable operating device 30 is hardwired or wirelessly connected to the control unit 5, for teaching and manually operating the robots. Such a portable operating device 30 is also called a graphical teach pendant unit (GTPU). The operating device 30 comprises operator control means 31, for example a joystick, and a visual display unit 32. The device for avoiding collisions is adapted to generate a human-machine interface, which is displayed on the display unit 32. The human-machine interface, for example, displays for each soft zone information on whether it is occupied or not, and if the soft zone is occupied information on which one of the robots or moving objects is occupying the soft zone, and information on whether there is a robot waiting for entering the soft zone, and in that case the identification of the waiting robot.

In a robot program it can be useful to be able to remove a robot from the queue to a soft zone and use the waiting time to something else. This function is, for example, implemented by making a call to an interruption routine at the same time as the signal, which includes information on that the robot is put into the queue, is set. The interruption routine makes a further call to a routine that removes the robot from the queue and orders the robot to carry out another task. Alternatively, the human-machine interface may include a soft button 34, which can be activated by the robot operator in order to remove the robot from the queue. When the soft button 34 is activated, an order to remove the robot from the queue is sent to the collision monitoring unit 14, which removes the robot from the queue.

It can also be useful for an operator to be able to manually activate and deactivate hard and soft zones, for instance, during process verification phases or during robot path retouching in a work-cell. For this purpose, the human-machine interface may include a soft button 35, which can be activated by the robot operator in order to activate and deactivate a selected zone. When the soft button 35 is activated, an order to activate/deactivate the zone is sent to the collision monitoring unit 14, which carries out the order. Preferably, all zones of the same category are activated and deactivated at the same time, but if necessary a given zone can be activated and deactivated independently of other zones belonging to the same category. Options for activating and deactivating zones are passed as arguments in programmed robot commands or via soft buttons in the operating device 30. Activation and deactivation of zones can also be achieved directly by program instruction.

In some cases, it can further be useful for an operator to be able to manually unlock an occupied soft zone, and thereby allow entrance to the soft zone even though it is occupied. For this purpose, the human-machine interface may include a soft button 36, which upon activation unlock an occupied soft zone. When the soft button 36 is activated, an order to unlock the zone is sent to the collision monitoring unit 14, which carries out the order. This function can also be implemented by a program instruction, which orders unlock of an occupied soft zone for a certain robot or moving object.

Sometimes it can additionally be useful for an operator to be able to manually convert a hard zone into a soft zone or to convert a soft zone into a hard zone. For this purpose, the human-machine interface may include a soft button 37, which upon activation converts an elected zone. When the soft button 37 is activated, an order to convert the zone is sent to the collision monitoring unit 14, which carries out the order. This function can also be implemented by a program instruction, which orders conversion of a zone. The conversion operation can be programmable e.g. by adding an optional parameter into dedicated robot instructions for defining zones. When added into a zone definition, the optional parameter shall indicate which hard zone should convert into a soft zone when the hard zone comes in contact with another specified hard zone or group of zones. Similarly, it is possible to convert a soft zone into a hard one by e.g. sending a signal for the soft zone to the corresponding robot controller for marking the soft zone as if it were occupied by a hard zone while it is not.

In order to detect whether a hard zone is entering or leaving the soft zone, the shortest distance d1,d2,d3 between the hard zone and the surface of the soft zone is repeatedly calculated. Alternatively, it may be detected whether a hard zone is entering or leaving a soft zone, by means of checking whether the zones overlap.

When the stop unit 10 receives a stop order from the collision monitoring unit 14, the robot is braked until its movements are stopped. The robot is preferably kept on its path during the braking. The robot keeps waiting in the stop position until it receives a resume order from the collision monitoring unit.

Alternatively, the device for avoiding collisions can be made as a separate hardware unit adapted to receive information on future joint angles from separate path planner units of the robots 1,2. This is particularly advantageous in a robot system where the robots are provided with individual control units. In such an embodiment, the device receives information on the planned paths from each of the path planner units and communicates stop and resume orders to the concerned robot control units. Alternatively, it is also possible to use an already existing safety system, for instance a PLC, in order to stop or resume the movement of a robot.

The collision monitoring unit 14 is adapted to calculate the shortest distances between the hard zones of the moving objects and the surface of the soft zone at a plurality of future point in time and on basis thereof detecting whether the hard zone is about to enter or leave the soft zone. The shortest distance is for example calculated by means of the Gilbert-Johnson-Keerthi (GJK) algorithm.

The following data must be known before the program algorithm starts:
- kinematic models of the robot. These models are used to compute the positions of the robots in real time and thereby the positions of the hard zones, and
- shape, dimensions, attachment point and possible orientation of the zones. The orientation is needed in order to calculate the inclined position of a hard zone relative to the axes of the reference coordinate system of the object it is attached to.

Data that must be communicated to the collision monitoring unit are joint values from the path planner unit(s). These are used as input to the kinematic models of the robots in order to calculate the positions of the components of the robot.

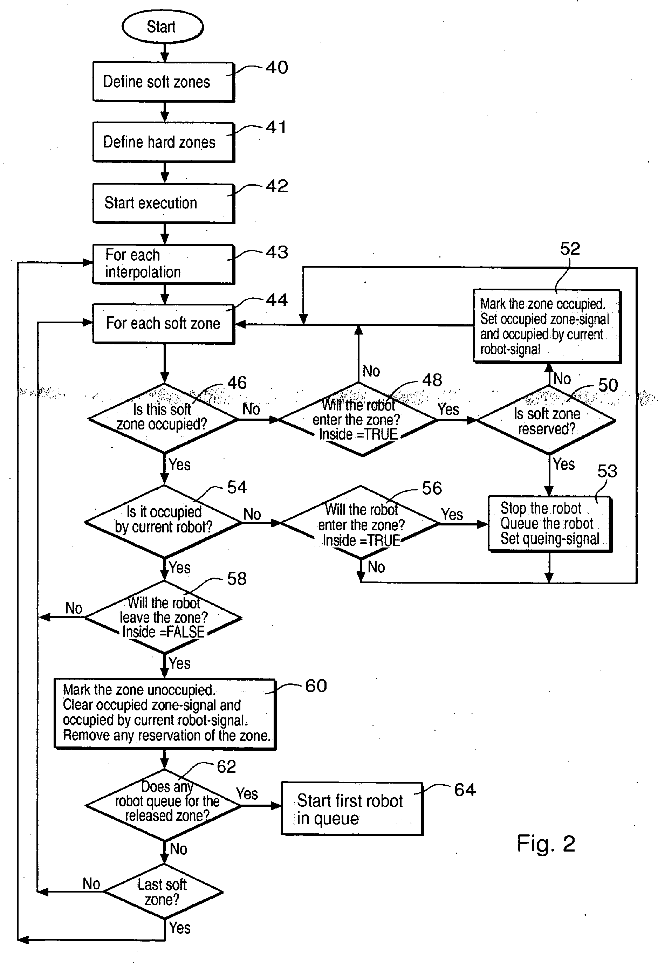

Figure 2 is a flow chart illustration of a method and a computer program product according to an embodiment of the present invention. It shall be understood that each block of the flow chart can be implemented by computer program instructions.

Before execution of the collision avoidance algorithm can begin, one or more soft zones have to be defined for the common work areas of the moving objects, block 40, and one or more hard zones enclosing each of the moving objects have to be defined, block 41. The soft zone definition shall include information on which movable object should recognize which soft zone. By this means, the collision monitoring unit 14 will only calculate shortest distances between hard- and soft zones which are to know each other. Hence, unnecessary computational load can be avoided. By default, however, and for higher safety, all soft zones may be defined to be recognized by all possible movable hard zone. The characteristics of each zone can, for example, be defined by programming instructions or by loading predefined zone description files to the collision monitoring unit or by a combination of both. The zone description file can be created in an off-line environment, or online from the graphical teach pendant unit. A zone description file may contain the following information:
- the type of zone, i.e. if it is a hard or a soft zone,
- the geometry of the zone,
- the orientation of the zone,
- the attachment of the zones to the object, including the reference coordinate system for each zone with respect to the object,
- the category of the object (optionally), and
- one or more variables belonging to the zone (optionally).

If more than one hard zone is defined for an object, it is advantageous to group them together by assigning them the same category. For example, all hard zones of the robot 1 are assigned the category ROB1 and all hard zones of the robot 2 are assigned the category ROB2. This can, for example, be used to allow entrance of a moving object protected by several hard zones into a soft zone, when one of the hard zones attached to the moving object is already occupying the soft zone.

Each soft zone may have an occupied-zone variable, for example a signal or a flag, including information on whether the zone is occupied or not. For each of the moving objects there are two variables provided: a first variable including information on whether or not the robot is occupying a soft zone at that moment, and a second variable including information on whether or not the robot is queuing for any of the soft zones.

The following algorithm is repeated for each interpolation step of the path planner unit(s). For each interpolation step, joint angles for all moving objects, in this case joint angles for all the robots, are received from the path planner unit(s), block 43. The algorithm defined by the blocks 44-64 is repeated for each robot or moving object for each interpolation step. For each soft zone supposed to be recognized by a given robot or moving object, it is checked whether the zone is occupied or not, block 46. If the soft zone is not occupied in the present interpolation step, it is detected whether the robot will enter the soft zone during the next interpolation step, based on the received joint angles from the path planner, block 48. The path planner calculates the next movement of the robot and this means that it is possible to decide whether the robot will enter the soft zone during the next movement of the robot.

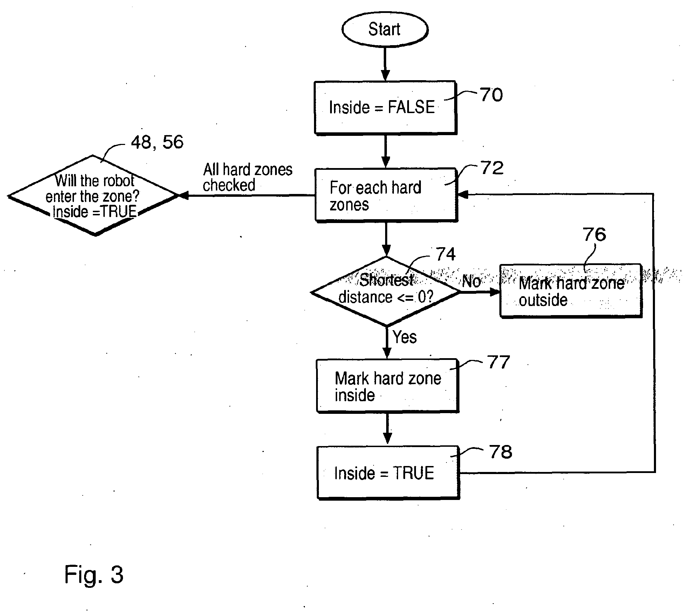

An algorithm for detecting whether or not the robot will enter the soft zone during the next interpolation is described in more detail with reference to figure 3. The algorithm for determining whether or not the robot will enter the soft zone during the next interpolation returns a flag denoted "inside". If the flag "inside" = TRUE, the robot is about to enter the zone, and if the flag "inside" = FALSE, the robot is about to leave the zone. If it is determined that the robot is not going to enter the soft zone during the next interpolation, the algorithm is repeated for the next soft zone.

It is possible to make a reservation in advance of a soft zone for any of the robots or moving object in the work cell. This function can, for example, be implemented by a program instruction in the robot program, which marks the soft zone as reserved for a certain robot. If it is determined that the robot will enter the soft zone during the next interpolation, it is checked whether the soft zone is reserved by any of the other robots or moving objects, block 50. If the soft zone is reserved by any of the other moving objects, a stop order is sent to the robot control unit, and the robot is put into a queue waiting at the boundary of the soft zone until the latter is released, block 53. When the robot is put into the queue, block 53, a variable is set including information on which robot is waiting for entering the soft zone.

If the robot, during next interpolation, will enter a soft zone that is not occupied and not reserved by any other object or robot, the soft zone is marked as occupied and a signal or a variable is generated including information on which robot or object is occupying the soft zone, block 52.

If the soft zone is occupied, block 46, it is detected whether the zone is occupied by the current robot or another robot, block 54. If the current robot does not occupy the soft zone, i.e. the zone is occupied by another robot or object, it is determined whether the robot will enter the soft zone at the next interpolation, block 56. If the robot will enter the soft zone at the next interpolation, a stop order is sent to the robot control unit and the robot is put into the queue for the soft zone, waiting at its boundaries until the soft zone is released. Further, the queuing signal or variable is set, block 53. If the robot will not enter the soft zone during the next interpolation, the algorithm is repeated for the next soft zone, block 44, until all soft zones supposed to be recognized by the robot have been looped through.

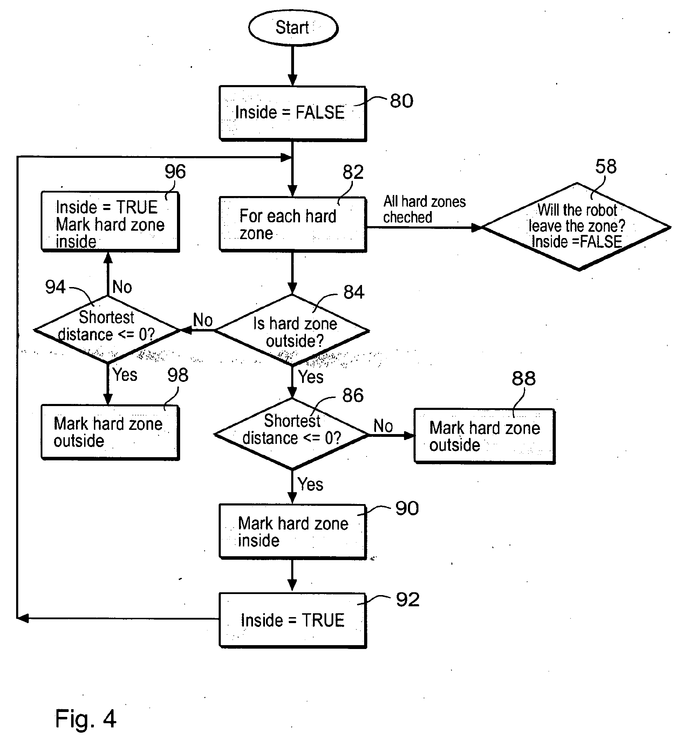

If the current robot occupies the soft zone, block 54, it is determined whether or not the robot will leave the zone during the next interpolation, block 58. This algorithm will be described in more detail with reference to figure 4. If the robot will not leave the zone during the next interpolation, the algorithm is repeated for the next soft zone, block 44. If the robot will leave the zone during the next interpolation, the soft zone is marked as unoccupied, the occupied zone variable is cleared, the signal or variable including information on which one of the moving objects is occupying the soft zone is cleared, and any reservation of the zone is removed, block 60.

If the robot will leave the zone at the next interpolation, it is checked if any robot or moving object is queuing for the released zone, block 62. If there is a robot or moving object in the queue, an order to resume the movement is sent to the first object in the queue, block 64.

Figure 3 shows the algorithm run at block 48 and 56, which determines whether the robot will enter the soft zone or not. The algorithm includes a calculation, which decides if any of the hard zones of the robot or the moving object will enter the soft zone at the next interpolation. It is determined whether the shortest distance between any of the hard zones of the robot and surface of the soft zone is smaller than or equal to zero during the next interpolation. Joint angles for the next interpolation are received from the path planner unit(s) of the respective moving objects.

Before starting the algorithm, a flag denoted "inside" is set to FALSE, block 70. If "inside" = FALSE, the robot will be outside the soft zone during the next interpolation. As all hard zones of a robot or a moving object are assigned the same category, it is easy to find the zones belonging to the robot or the object. For each hard zone of the robot or moving object, i.e. for all hard zones having the same category as the robot or object, block 72, the shortest distance between the hard zone and the surface of the soft zone is calculated. Further, it is detected whether the shortest distance at any time during the next interpolation is shorter than or equal to zero. If the shortest distance is not shorter than or equal to zero during the next interpolation, the hard zone is marked as outside the soft zone, block 76. If the shortest distance is shorter than or equal to zero during the next interpolation, block 74, the hard zone is marked as inside the soft zone, block 77, and the flag "inside" is set to TRUE, block 78. When all of the hard zones have been checked, the flag "inside" will include information on whether any of the hard zones is inside the soft zone, which means that the robot will enter the soft zone during the next interpolation. If the flag "inside" is still false after all hard zones of the robot have been looped through, the robot will not enter the soft zone during the next interpolation. If the flag "inside" is true after all hard zones from that robot have been looped through, the robot will enter the soft zone during the next interpolation.

Figure 4 shows an algorithm for deciding whether or not the robot is leaving the soft zone at the next interpolation. If true, the flag "inside" is set to FALSE, block 80. The following steps are repeated for each hard zone of the robot or moving object, block 82. If more than one hard zone is defined for the robot it is possible that some of the hard zones are inside the soft zone and some of the hard zones are outside the soft zone. If a hard zone during the last interpolation was marked as outside the soft zone, block 84, the shortest distance between the hard zone and the surface of the soft zone is calculated, block 86. If the shortest distance during next interpolation is larger than zero, the hard zone is marked as outside the soft zone, block 88. If the shortest distance between the hard zone and the soft zone is less than or equal to zero, the hard zone is marked as inside the soft zone, block 90, and the flag "inside" is set to TRUE, block 92.

If the hard zone was not marked as outside during the last interpolation, block 84, and the shortest distance during the next interpolation is larger than zero, block 94, the hard zone is still inside the soft zone and the flag "inside" is set to TRUE, block 96. If the shortest distance is less than or equal to zero, block 94, the robot will leave the soft zone during the next interpolation and the hard zone is marked as outside, block 98. If the flag "inside" is still false after all hard zones have been looped through, the robot will leave the soft zone during the next interpolation. If the flag "inside" is true after all hard zones have been looped through, the robot will not leave the soft zone during the next interpolation.

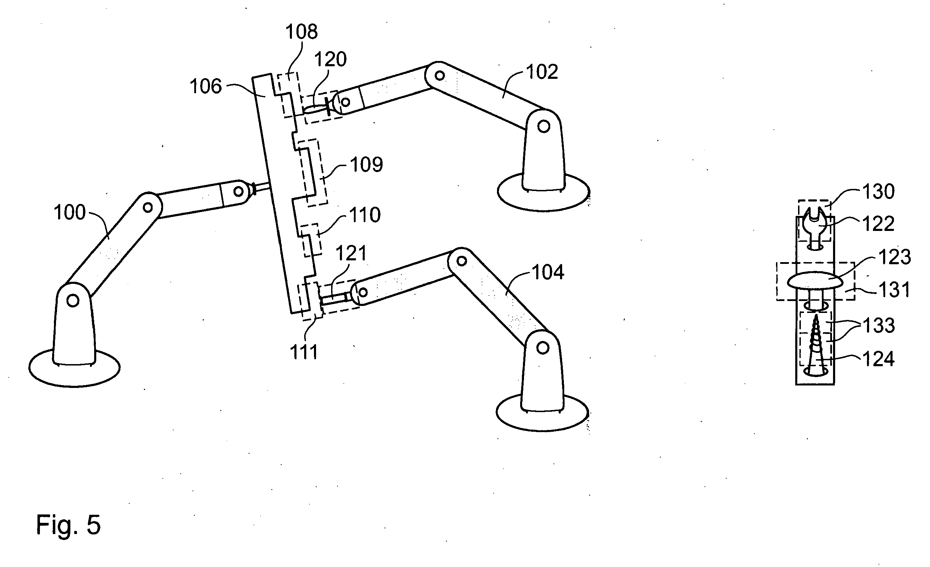

According to an embodiment of the invention it is possible to group hard zones as well as soft zones into different categories. Figure 5 shows an application for which it can be useful to group soft zones as well as hard zones into categories. A robot cell comprises three robots 100,102,104. The robot 100 carries a workpiece 106 and the robots 102,104 perform work on the workpiece 106. Four soft zones 108,109,110,111 are defined on the workpiece 106. The soft zones 108-111 can be assigned different categories, or the same category. The category of a soft object is, for example, included in the zone description file. In this application the robots use a plurality of different tools 122,123,124. During the work cycle the robots change between the tools. One or more hard zones 130,131,133 enclose each of the tools. The hard zones belonging to the same tool are assigned the same category and the hard zones belonging to different tools are assigned different categories. Thereby, it is possible to activate and deactivate zones of the same category at the same time. Thus, when the robot picks up one of the tools, the hard zones of the picked-up tool can be activated, and when the robot leaves a tool, which is therefore not going to be in use for a while, the hard zones of the unused tool can be deactivated. Thereby, only tools that are actually in use may have activated hard zones. Similarly, soft zones possibly associated with robot trajectories corresponding to the utilization of certain tools can also be activated and deactivated depending on when those tools are being used.

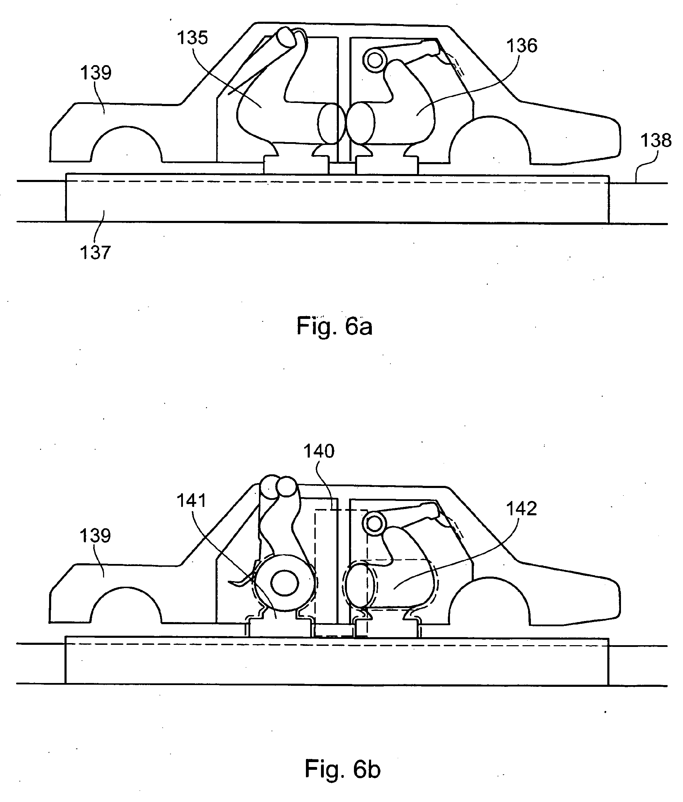

According to an embodiment of the invention it is possible to attach a soft zone to a moving object in such a way that when the object is moving relative to its surrounding, the soft zone is moving in a corresponding manner with a fixed position relative to the object. Figures 6a-6b illustrate an application for which it can be useful to use moving soft zones. Two robots 135, 136 are mounted on a same track-motion 137, parallel to a conveyor 138 on which car-bodies 139 pass through at low speed without stopping. The robots have each entered the same car-body 139 from its side and through the front and rear door-openings, respectively. Each robot carries e.g. a dispensing or a painting gun in order to glue, seal, or paint the interior of the car-body that is constantly moving at a fixed speed. The exiguity of the car interior space and the amplitude variations of the movements of the robot guns along their programmed paths can lead to interference between parts of the robots usually located outside the car interior.

Figure 6a gives an example of such a situation when no collision prevention means exists between the two robots. In practice, the geometry of the workpiece, the robot types used, and the configuration of the work-cell can expose other robot parts to collisions, than those described in figure 6a. By defining a moving soft zone 140 attached to the car-body 139, and one or several hard zones 141 around the robot 135, and one or several hard zones 142 around the robot 136 as shown in figure 6b, collision between the robots can be avoided. The first of the two robots of which any hard zone's shortest distance to the soft zone becomes less than zero, will occupy the soft zone that hence will become impenetrable for the other robot as long as it is occupied.

While an occupied stationary (i.e. not moving) soft zone would cause any moving hard zone coming at the boundary to its surface to stop moving and wait until the soft zone is free, a moving soft zone will act differently. Stopping a robot located inside a moving frame, like a car-body, when one of the hard zones of the robot has reached the boundary of an occupied soft zone attached to the car-body, would require stopping the vehicle on the conveyor until the robot occupying the soft zone has left it. Such a procedure would lead to increased cycle-time that could diminish the production rate of a manufacturing line and possibly create bottlenecks if high flows of material through the line are a necessity. Thus, in contact with an occupied moving soft zone, a moving object shall be allowed to keep moving along the zone while keeping the same position relative to the soft zone. Such a soft zone shall always be defined in the coordinate system of a moving mechanical unit controlled by the robot controller.

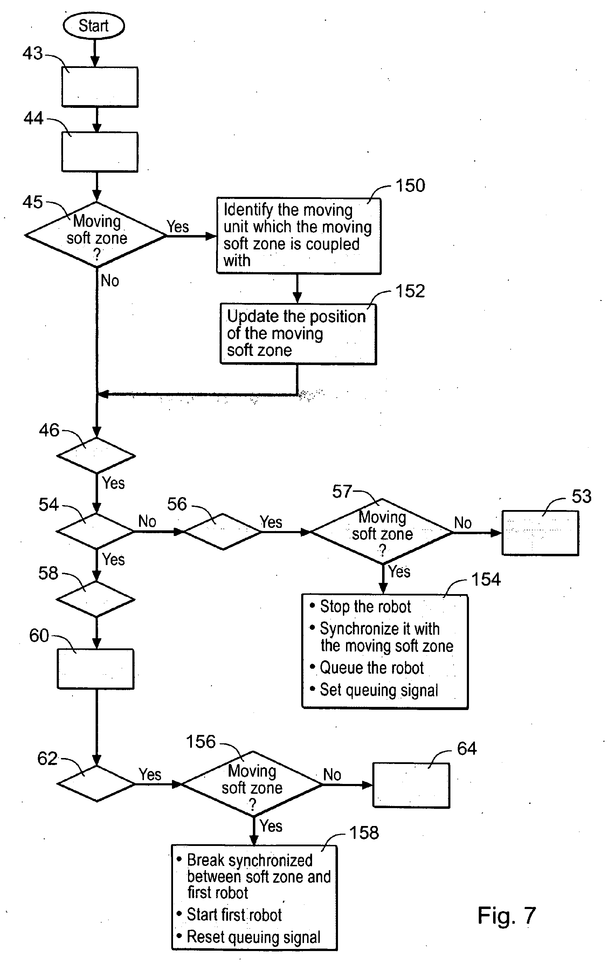

Figure 7 shows a variant of the flow chart of figure 2, when moving soft zones are used with the present invention. Blocks corresponding to equal blocks of the embodiment shown in figure 2, are given the same reference numbers as the corresponding blocks of this embodiment. For each robot interpolation, block 43 and for each soft zone of concern for that robot, block 44, a test is added to check whether the soft zone is a moving zone, block 45. The moving unit, which the soft zone is coupled with, shall be identified, block 150, before the position of the moving soft zone can be updated, block 152. If a moving soft zone is being occupied when a robot wants to enter it, block 55-56, then the robot is stopped and immediately synchronized with the moving soft zone, block 154. Like with a stationary soft zone, the robot is further queued and a queuing signal is set, block 154. When an occupied soft zone is released, block 60, before any queuing robot can be restarted block 62, a test is done to check whether the soft zone is moving, block 156. If so, the synchronization between the moving soft zone and the robot is interrupted, and the queuing signal for that robot in entrance to the moving soft zone is reset, block 158.

In the example of figure 6a-b, the moving soft zone 140 is attached to the car body 139. As the car-body is thus transported from work-cell to work-cell, the activation of a predefined moving soft zone attached to the car-body can be done in association with the detection of the car-body in each work-cell of concern. By this means, only relevant zones for each workpiece coming into a given work-cell are activated at a time, hence limiting CPU-load on the corresponding control unit(s) of the work-cell. At activation of the moving soft zone, its position shall be referenced in the coordinate system of the mechanical unit that carries the car-body in the work-cell.

According to another embodiment of the present invention, the shape, i.e. the contour and size, of a zone can be automatically varied in time in dependence on the shape of the object being enclosed. Figure 8a shows a tool 162, in this case a suction gripper, and a hard zone 166, defined such that it encloses the tool. Figure 8b shows the tool 162 carrying an object 164, and a hard zone 168, defined such that it encloses the tool and the object, when it is carried by the tool. The definitions of the hard zones 166 and 168 are stored in the memory 12 of the control unit 5. Figures 8c-d illustrate a robot 160 equipped with the gripper 162 respectively before and after the workpiece 164 was held by the gripper.

Figures 9a-b show another example of how the shape of a hard zone can be varied in dependence on the shape of the object it encloses. In this case the shape of the hard zone is varied in dependence on the status of the tool. The status of the tool is for example open or closed. Internal information on the status of a tool such, as a gripper or a welding gun, is usually available on the robot control unit in the form of at least one internal variable, or signal or any equivalent flag. This information is transferred to the zone shape adaptation unit 15 of the control unit 5, shown in figure 1. Combining that information with a suitable robot command enables to switch automatically between two or more different predefined shapes of hard zones around a reference point of the tool as e.g. the Tool Center Point (TCP) of the robot. In this case a larger hard zone 169, which is enclosing the tool when it is opened, and a smaller hard zone 170, which is enclosing the tool when it is closed, are defined and stored in the memory 12 of the control unit. If the status of the tool is open, the larger hard zone 169 is used, and if the status of the tool is closed the smaller hard zone 170 is used.

For double safety, information on the status of the tool provided by internal data from inside the robot controller can be checked against a signal sent by an added cheap sensor 171 mounted on the tool. Should information on the tool status not be directly available from the robot controller, then the signal obtained from the added sensor on the tool, and connected to the robot controller via a signal bus can be used instead. Alternatively, the selection of which hard zone to be used can be based solely the status of the tool detected by the sensor. As shown in figure 9a-b, the sensor may include an activator 172 and a proximity switch 173, which provides a tool status signal being either high or low in dependence on the status of the tool. According to the tool status signal, one of the hard zones 169 and 170 is selected. Thus, in this embodiment, the zone shape adaptation unit 15 is adapted to receive information on the status of the tool and to select which one of a plurality of stored hard zones of varying shapes, to be used in dependence on the status of the tool.

In the following, an example of a method for varying the shape of a hard zone in dependence on the shape of the object will be described. At start-up of a robot controller, information on tool status is read from a set-up file common to all mechanical units connected to the controller. For higher safety, a verification of each tool status can be performed by comparing the status from the set-up file with the status of a signal transmitted directly from an added sensor on each tool. For each tool, one among two or more predefined hard zones attached to the TCP is activated based on the tool status. The corresponding hard zone is marked as active and internal variables on tool status in the robot controller are updated. At each interpolation step in the path planner unit 9 of the controller, changes in the tool status are monitored for each tool based on internal variables in the robot control unit.

Changes in the tool status are possibly compared to changes in signal status from each added sensor on the tool. If both sources of tool status indicate no change, the next interpolation proceeds without change in the activation of the hard zones around the tools. If both sources of tool status indicate a change, the presently activated hard zone is deactivated, and the hard zone corresponding to the new state is activated instead and internal variables on tool status in the robot controller are updated. Whenever the sources of tool status indicate opposite information, an error is triggered by the zone shape adaptation unit 15 and a stop order for the robot or moving object of concern is ordered to the controller of the mechanical unit.

Figure 10 shows an example of two-dimensional hard zones protecting a tool hold by the robot. The hard zones are attached to a tool holder of the robot. Two hard zones 100, 182, in the form of planes, are located on opposite sides of the tool and designed such that they cover two sides of the tool. It is also possible to have three or more two-dimensional hard zones covering other sides of the tool. The figure also shows a soft zone 182.

## Claims

1. A method for avoiding collisions between a plurality of moving objects (102,104,120,121,122,123,124) including at least one multi-axial industrial robot, wherein the method comprises:
defining a plurality of three-dimensional soft zones (108,109,110,111), each enclosing a common area in which the operating areas of the moving objects overlap each other,
defining a plurality of three-dimensional hard zones (130,131,133), each attached to a different one of said moving objects, **characterized in that** the method further comprises:
grouping said hard and soft zones into at least two different categories such that at least one hard zone and at least one soft zone belong to the same category, wherein zones of the same category are activated and deactivated at the same time, and the method further comprises repeatedly:
determining whether any part of an activated hard zone of any of the movable objects is within any of the activated soft zones, and
forbidding movable objects entrance to a given activated soft zone if any part of an activated hard zone of another of the movable objects already is located within the given activated soft zone.

2. The method according to claim 1, wherein the method comprises: estimating the shortest distances (d1,d2,d3) between the activated hard zones and the surface of the given activated soft zone and based thereon determining whether any part of the activated hard zones is located within to the given activated soft zone.

3. The method according to any of the previous claims, wherein the robot uses a plurality of exchangeable robot tools (122,123,124) or workpieces, and the method comprises: enclosing each of said tools or workpieces with one or more of said hard zones (130,131,133), assigning the same category to hard zones belonging to the same tool or workpiece, and assigning different categories to hard zones belonging to or associated with different tools or workpieces.

4. The method according to any of the previous claims, wherein it comprises: setting a first variable including information on whether the given activated soft zone is occupied or unoccupied by one of the movable objects, forbidding the other movable objects entrance to the given activated soft zone in dependence on said variable.

5. The method according to any of the previous claims, wherein it comprises: setting a second variable including information on which one of the movable objects is occupying the given activated soft zone, and a third variable including information on whether or not any of the movable objects is waiting for entering the given activated soft zone.

6. The method according to any of the previous claims, wherein at least one of said hard zones is enclosing at least a part of a workpiece, a tool, or any other object, and the method further comprises: automatically varying in time the shape of the at least one hard zone (166,168;169,170) in dependence on the shape of the object being enclosed.

7. The method according to any of the previous claims, wherein at least one of said hard zones is enclosing at least a part of a tool, and the method further comprises: receiving information on the status of the tool and automatically varying the shape of the at least one hard zone (169,170) enclosing at least a part of the tool in dependence on the status of the tool.

8. The method according to any of the previous claims, wherein the method comprises converting one of the hard zones into a soft zone and or converting one of the soft zones into a hard zone.

9. A computer program product directly loadable into the internal memory of a computer, comprising software for performing the steps of any of the claims 1-8.

10. A computer-readable medium, having a program recorded thereon, where the program is to make a computer perform the steps of any of the claims 1-8 when said program is run on the computer.

11. A device for avoiding collisions between a plurality of moving objects (102,104,120,121,122,123,124) including at least one multi-axial industrial robot, the device comprises a memory (12) for storing data rendered by defining a plurality of soft zones (108,109,110,111), each enclosing a common area in which the operating areas of the moving objects overlap each other, and defining a plurality of three-dimensional hard zones (130,131,133), each attached to a different one of said moving objects, **characterized In that** said memory is adapted for storing information on which category each of the zones belongs to, the device is adapted to allow the zones to be grouped into different categories such that at least one hard zone and at least one soft zone belong to the same category, and the device further comprises means (34) for activating zones of the same category at the same time and deactivating zones of the same category at the same time, and a collision monitoring unit (14) adapted to determine whether any part of an activated hard zone of any of the movable objects is within any of the activated soft zones, and to forbid movable objects entrance to a given activated soft zone if any part of an activated hard zone of another of the movable objects already is located within the given activated soft zone.

12. The device according to claim 11, wherein said collision monitoring unit (14) is adapted to estimate the shortest distances (d1,d2,d3) between the activated hard zones and the surface of the given activated soft zone, and based thereon determine whether any part of the activated hard zones is located within the given activated soft zone,

13. The device according to claim 11 or 12, wherein the robot uses a plurality of exchangeable robot tools (122,123,124) or workpieces, and each of said hard zones (130,131,133) are attached to one of said robot tools or workpieces.

14. The device according to any of the claims 11-13, wherein it comprises a human-machine interface (32) that displays information on whether the given activated soft zone is occupied or unoccupied, displays information on which one of the movable objects is occupying the given activated soft zone, and information on whether or not any of the movable object is waiting for entering the given activated soft zone.

15. The device according to any of the claims 11-14, wherein it comprises means (36) for manually unlocking an occupied activated soft zone and thereby allowing entrance to the soft zone even though it is occupied.

16. The device according to any of the claims 11-15, wherein it comprises means (37) for converting one of the hard zones intro a soft zone and for converting one of the soft zones into a hard zone.

17. The device according to any of the claims 11-16, wherein said collision monitoring unit (14) is adapted to set a first variable including information on whether the given activated soft zone is occupied or unoccupied, and to forbid the movable objects entrance to the soft zone in dependence on said variable.

18. The device according to any of the claims 11-17, wherein at least one of said soft or hard zones is enclosing at least a part of a workpiece, a tool, or any other object, and the device further comprises a zone shape adaptation unit (15) adapted to automatically vary in time the shape of the at least one zone in dependence on the shape of the object being enclosed.

19. The device according to any of the claims 11-18, wherein at least one of said hard zones (19,170) is enclosing at least a part of a tool, and said memory (12) for storing data is adapted to store data rendered by defining two or more three-dimensional hard zones of varying shapes enclosing said tool, and said zone handling unit (15) is adapted to receive information on the status of the tool and automatically varying the shape of the at least one hard zone enclosing at least a part of the tool in dependence on the status of the tool and said stored hard zones of varying shapes.

## Patentansprüche

1. Verfahren zum Verhindern von Kollisionen zwischen mehreren sich bewegenden Objekten (102,104,120,121,122,123,124) einschließlich mindestens eines mehrachsigen Industrieroboters, wobei das Verfahren umfasst:
Definieren mehrerer dreidimensionaler Weichzonen (108,109,110, 111), von denen jede einen gemeinsamen Bereich einschließt, in dem die Betriebsbereiche der sich bewegenden Objekte einander überlappen,
Definieren mehrerer dreidimensionaler Hartzonen (130,131,133), von denen jede an einem anderen der sich bewegenden Objekte angeordnet ist,
**dadurch gekennzeichnet, dass** das Verfahren ferner umfasst:
Gruppieren der Hart- und Weichzonen in mindestens zwei verschiedene Kategorien, derart, dass mindestens eine Hartzone und mindestens eine Weichzone zu der gleichen Kategorie gehören, wobei Zonen der gleichen Kategorie zeitgleich aktiviert und deaktiviert werden, und wobei das Verfahren ferner die wiederholte Durchführung folgender Schritte umfasst:
Prüfen, ob sich ein Teil einer aktivierten Hartzone eines der bewegbaren Objekte innerhalb einer der aktivierten Weichzonen befindet, und
Verweigern des Eintritts bewegbarer Objekte in eine gegebene aktivierte Weichzone, falls sich ein Teil einer aktivierten Hartzone eines weiteren der bewegbaren Objekte bereits innerhalb der gegebenen aktivierten Weichzone befindet.

2. Verfahren nach Anspruch 1, wobei das Verfahren umfasst: Schätzen der kürzesten Abstände (d1,d2,d3) zwischen den aktivierten Hartzonen und der Oberfläche der gegebenen aktivierten Weichzone, und, basierend darauf, Prüfen, ob sich ein Teil der aktivierten Hartzonen innerhalb der gegebenen aktivierten Weichzone befindet.

3. Verfahren nach einem der vorhergehenden Ansprüche, bei dem der Roboter mehrere austauschbare Roboterwerkzeuge (122,123,124) oder Werkstücke verwendet, und wobei das Verfahren umfasst: Umschließen jedes der Werkzeuge oder Werkstücke mit einer oder mehreren der Hartzonen (130,131,133), Zuweisen der selben Kategorie zu Hartzonen, die zu dem selben Werkzeug oder Werkstück gehören, und Zuweisen unterschiedlicher Kategorien zu Hartzonen, die unterschiedlichen Werkzeugen oder Werkstücken zugehören oder diesen zugeordnet sind.

4. Verfahren nach einem der vorhergehenden Ansprüche, wobei das Verfahren umfasst: Setzen einer ersten Variablen, die Information darüber enthält, ob die gegebene aktivierte Weichzone durch eines der bewegbaren Objekte belegt ist oder nicht belegt ist, und Verweigern des Eintritts der anderen bewegbareren Objekte in die gegebene aktivierte Weichzone in Abhängigkeit von der Variablen.

5. Verfahren nach einem der vorhergehenden Ansprüche, wobei das Verfahren umfasst: Setzen einer zweiten Variablen, die Information darüber enthält, ob eines der bewegbaren Objekte die gegebene aktivierte Weichzone belegt, und einer dritten Variablen, die Information darüber enthält, ob eines der bewegbaren Objekte auf den Eintritt in die gegebene aktivierte Weichzone wartet oder nicht.

6. Verfahren nach einem der vorhergehenden Ansprüche, bei dem mindestens eine der Hartzonen mindestens einen Teil eines Werkstücks, eines Werkzeugs oder eines anderen Objekts umschließt, und wobei das Verfahren ferner umfasst: automatisches zeitliches Variieren der Form der mindestens einen Hartzone (166,168;169,170) in Abhängigkeit von der Form des umschlossenen Objekts.

7. Verfahren nach einem der vorhergehenden Ansprüche, bei dem mindestens eine der Hartzonen mindestens einen Teil eines Werkzeugs umschließt und das Verfahren ferner umfasst: Empfangen von Information über den Status des Werkzeugs und automatisches Variieren der Form der mindestens einen Teil des Werkzeugs umschließende mindestens einen Hartzone (169,170) in Abhängigkeit von dem Status des Werkzeugs.

8. Verfahren nach einem der vorhergehenden Ansprüche, wobei das Verfahren das Konvertieren einer der Hartzonen in eine Weichzone und/oder das Konvertieren einer der Weichzonen in eine Hartzone umfasst,

9. Computerprogramm-Produkt zum direkten Laden in den internen Speicher eines Computers, mit Software zum Durchführen der Schritte nach einem der Ansprüche 1-8.

10. Computerlesbares Medium mit einem darauf aufgezeichneten Programm, wobei das Programm bei Anwendung auf dem Computer den Computer zur Durchführung der Schritte nach einem der Ansprüche 1-8 befähigt.

11. Vorrichtung zum Verhindern von Kollisionen zwischen mehreren sich bewegenden Objekten (102,104,120,121,122,123,124) einschließlich mindestens eines mehrachsigen Industrieroboters, wobei die Vorrichtung einen Speicher (12) zum Speichern von Daten aufweist, die durch Definieren mehrerer Weichzonen (108,109,110,111), von denen jede einen gemeinsamen Bereich umschließt, in dem die Betriebsbereiche der sich bewegenden Objekte einander überlappen, und durch Definieren mehrerer dreidimensionaler Hartzonen (130,131, 133) erhalten werden, von denen jede an einem anderen der sich bewegenden Objekte angeordnet ist, **dadurch gekennzeichnet, dass** der Speicher Information darüber speichert, welcher Kategorie jede der Zonen zugehört, dass die Vorrichtung die Zonen derart in verschiedene Kategorien gruppieren kann, dass mindestens eine Hartzone und mindestens eine Weichzone zu der gleichen Kategorie gehören, und dass die Vorrichtung ferner Mittel (34), um Zonen der gleichen Kategorie gleichzeitig zu aktivieren und Zonen der gleichen Kategorie gleichzeitig zu deaktivieren, und eine Kollisionsüberwachungseinheit (14) aufweist, um zu prüfen, ob sich ein Teil einer aktivierten Hartzone eines der bewegbaren Objekte innerhalb einer der aktivierten Weichzonen befindet, und um den Eintritt bewegbarer Objekte in eine gegebene aktivierte Weichzone zu verweigern, falls sich ein Teil einer aktivierten Hartzone eines weiteren der bewegbaren Objekte bereits innerhalb der gegebenen aktivierten Weichzone befindet.

12. Vorrichtung nach Anspruch 11, bei der die Kollisionsüberwachungseinheit (14) derart ausgebildet ist, dass sie die kürzesten Abstände (d1,d2,d3) zwischen den aktivierten Hartzonen und der Oberfläche der gegebenen aktivierten Weichzone schätzt und basierend darauf prüft, ob sich ein Teil der aktivierten Hartzonen innerhalb der gegebenen aktivierten Weichzone befindet.

13. Vorrichtung nach Anspruch 11 oder 12, bei der der Roboter mehrere austauschbare Roboterwerkzeuge (122,123,124) oder Werkstücke verwendet und jede der Hartzonen (130,131,133) an einem der Roboterwerkzeuge oder Werkstücke angebracht ist.

14. Vorrichtung nach einem der Ansprüche 11-13, mit einem Mensch-Maschine-Interface (32) zum Anzeigen von Information darüber, ob die gegebene aktivierte Weichzone belegt oder unbelegt ist, Information darüber, welches der bewegbaren Objekte die gegebene aktivierte Weichzone belegt und Information darüber, ob eines der bewegbaren Objekte auf den Eintritt in die gegebene aktivierte Weichzone wartet oder nicht.

15. Vorrichtung nach einem der Ansprüche 11-14, mit Mitteln (36), um eine belegte aktivierte Weichzone manuell zu entriegeln und **dadurch** den Eintritt in die Weichzone zu ermöglichen, obwohl diese belegt ist.

16. Vorrichtung nach einem der Ansprüche 11-15, mit Mitteln (37) zum Umsetzen einer der Hartzonen in eine Weichzone und zum Umsetzen einer der Weichzonen in eine Hartzone.

17. Vorrichtung nach einem der Ansprüche 11-16, bei der die Kollisionsüberwachungseinheit (14) eine erste Variable setzt, die Information darüber enthält, ob die gegebene aktivierte Weichzone durch eines der bewegbaren Objekte belegt oder nicht belegt ist, und den Eintritt der anderen bewegbareren Objekte in die Weichzone in Abhängigkeit von der Variablen verweigern kann.

18. Vorrichtung nach einem der Ansprüche 11-17, bei der mindestens eine der Weich- oder Hartzonen mindestens einen Teil eines Werkstücks, eines Werkzeugs oder eines anderen Objekts umschließt, und wobei die Vorrichtung ferner eine Zonenform-Anpassungseinheit (15) aufweist, um über der Zeit die Form der mindestens einen Zone in Abhängigkeit von der Form des umschlossenen Objekts automatisch zu variieren.

19. Vorrichtung nach einem der Ansprüche 11-18, bei der mindestens eine der Hartzonen (19,170) mindestens einen Teil eines Werkzeugs umschließt, und der zum Speichern von Daten vorgesehene Speicher (12) Daten speichert, die durch Definieren von zwei oder mehr das Werkzeug umschließender dreidimensionaler Hartzonen verschiedener Formen erhalten werden, und die Zonenhandhabungseinheit (15) Information über den Status des Werkzeugs empfängt und die Form der mindestens einen Teil des Werkzeugs umschließende mindestens einen Hartzone in Abhängigkeit von dem Status des Werkzeugs und der gespeicherten Hartzonen verschiedener Formen automatisch variiert.

## Revendications

1. Procédé permettant d'éviter des collisions entre une pluralité d'objets (102, 104, 120, 121, 122, 123, 124) en mouvement, comprenant au moins un robot industriel multiaxial, procédé dans lequel :
on définit une pluralité de zones (108, 109, 110, 111) douces en trois dimensions, chacune enfermant une zone commune dans laquelle les zones opératoires des objets en mouvement se chevauchent,
on définit une pluralité de zones (130, 131, 133) dures en trois dimensions, chacune adjointe à l'un différent des objets en mouvement, **caractérisé en ce que** le procédé comprend, en outre, les stades dans lesquels :
on regroupe les zones dures et douces en au moins deux catégories différentes, de manière à ce qu'au moins une zone dure et au moins une zone douce appartiennent à la même catégorie, des zones de la même catégorie étant activées et désactivées en même temps, et le procédé comprend, en outre, de manière répétée :
la détermination du point de savoir si une partie quelconque d'une zone dure activée de l'un quelconque des objets mobiles est l'une quelconque des zones douces activées, et
l'interdiction que des objets mobiles entrent dans une zone douce activée donnée, si une partie quelconque d'une zone dure activée d'un autre des autres objets mobiles se trouve déjà dans la zone douce activée donnée.

2. Procédé suivant la revendication 1, dans lequel le procédé comprend : l'estimation des distances (d1, d2, d3) les plus courtes entre les zones dures activées et la surface de la zone douce activée donnée et, sur cette base, la détermination du point de savoir si une partie quelconque des zones dures activées se trouve dans la zone douce activée donnée.

3. Procédé suivant l'une quelconque des revendications précédentes, dans lequel le robot utilise une pluralité d'outils (122, 123, 124) de robot ou des pièces échangeables et le procédé comprend le stade dans lequel on enferme chacun des outils ou des pièces par l'une ou plusieurs des zones (130, 131, 133) dures, on affecte la même catégorie aux zones dures appartenant au même outil ou à la même pièce, et on affecte des catégories différentes à des zones dures appartenant à des outils ou à des pièces différentes ou y étant associées.

4. Procédé suivant l'une quelconque des revendications précédentes, dans lequel : on fixe une première variable comprenant des informations sur le point de savoir si la zone douce activée donnée est occupée ou ne l'est pas par l' un des objets mobiles, on interdit aux autres objets mobiles d'entrer dans la zone douce activée donnée en fonction de la variable.

5. Procédé suivant l'une quelconque des revendications précédentes, dans lequel : on fixe une deuxième variable comprenant des informations sur le point de savoir celui des objets mobiles qui occupe la zone douce activée donnée et une troisième variable comprenant des informations sur le point de savoir si l'un quelconque des objets mobiles attend d'entrer dans la zone douce activée donnée ou ne le fait pas.

6. Procédé suivant l'une quelconque des revendications précédentes, dans lequel au moins l'une des zones dures enferme au moins une partie d'une pièce, un outil ou un autre objet et le procédé comprend, en outre, le fait de faire varier automatiquement dans le temps la forme de la au moins une zone (166, 168, 169, 170) dure en fonction de la forme de l'objet enfermé.

7. Procédé suivant l'une quelconque des revendications précédentes, dans lequel au moins l'une des zones dures enferme au moins une partie d'un outil et le procédé comprend, en outre, le fait de recevoir des informations sur l'état de l'outil et de faire varier automatiquement la forme de la au moins une zone (169, 170) dure enfermant au moins une partie de l'outil en fonction de l'état de l'outil.

8. Procédé suivant l'une quelconque des revendications précédentes, dans lequel le procédé comprend le fait de transformer l'une des zones dures en une zone douce et/ou de transformer l'une des zones douces en une zone dure.

9. Produit de programme informatique pouvant être chargé directement dans la mémoire interne d'un ordinateur comprenant du logiciel pour effectuer les stades suivant l'une quelconque des revendications 1 à 8.

10. Support pouvant être lu par un ordinateur ayant un programme qui y est enregistré, le programme étant destiné à faire en sorte qu'un ordinateur effectue les stades suivant l'une quelconque des revendications 1 à 8 lorsque le programme passe sur l'ordinateur.

11. Dispositif pour éviter des collisions entre une pluralité d'objets (102, 104, 120, 121, 122, 123, 124) en mouvement, comprenant au moins un robot industriel multiaxial le dispositif comprenant une mémoire (12) pour mémoriser des données destinées à définir une pluralité de zones (108, 109, 110, 111) douces, chacune enfermant une zone commune dans laquelle les régions opératoires des objets en mouvement se chevauchent et pour définir une pluralité de zones (130, 131, 133) dures en trois dimensions, chacune adjointe à l'un différent des objets en mouvement, **caractérisé en ce que** la mémoire est conçue pour mémoriser des informations sur la catégorie à laquelle chacune des zones appartient, le dispositif est conçu pour permettre aux zones de se regrouper en des catégories différentes de manière à ce que au moins une zone dure et au moins une zone douce appartiennent à la même catégorie et le dispositif comprend, en outre, des moyens (34) pour activer des zones de la même catégorie en même temps, et pour désactiver des zones de la même catégorie en même temps et une unité (14) de contrôle de collision, conçue pour déterminer si une partie quelconque d'une zone dure activée de l'un quelconque des objets mobiles se trouve dans l'une quelconque des zones douces activées et pour interdire à des objets mobiles d'entrer dans une zone douce activée donnée si une partie quelconque d'une zone dure activée d'un autre des objets mobiles se trouve déjà dans la zone douce activée donnée.

12. Dispositif suivant la revendication 11, dans lequel l'unité (14) de contrôle de collision est conçue pour estimer les distances (d1, d2, d3) les plus courtes entre les zones dures activées et la surface de la zone douce activée donnée et sur cette base pour déterminer si une partie quelconque des zones dures activées se trouve dans la zone douce activée donnée.

13. Dispositif suivant la revendication 11 ou 12, dans lequel le robot utilise une pluralité d'outils (122, 123, 124) de robot ou de pièces échangeables et chacune des zones (130, 131, 133) dures est adjointe à l'un des outils de robot ou à l'une des pièces.

14. Dispositif suivant l'une quelconque des revendications 11 à 13, dans lequel il comprend une interface (32) homme-machine qui affiche des informations sur le point de savoir si la zone douce activée donnée est occupée ou ne l'est pas, affiche des informations sur celui des objets mobiles qui occupe la zone douce activée donnée et des informations sur le point de savoir si l'un quelconque des objets mobiles attend d'entrer dans la zone douce activée donnée ou ne le fait pas.

15. Dispositif suivant l'une quelconque des revendications 11 à 14, qui comprend des moyens (36) pour déverrouiller manuellement une zone douce activée occupée et permettre ainsi d'entrer la zone douce même si elle est occupée.

16. Dispositif suivant l'une quelconque des revendications 11 à 15, qui comprend des moyens (37) pour transformer l'une des zones dures en une zone douce et pour transformer l'une des zones douces en une zone dure.

17. Dispositif suivant l'une quelconque des revendications 11 à 16, dans lequel l'unité (14) de contrôle de collision est conçue pour fixer une première variable comprenant des informations sur le point de savoir si la zone douce activée donnée est occupée ou ne l'est pas et pour interdire aux objets mobiles d'entrer dans la zone douce en fonction de la variable.

18. Dispositif suivant l'une quelconque des revendications 11 à 17, dans lequel au moins l'une des zones douces ou dures enferme au moins une partie d'une pièce, un outil ou un autre objet et le dispositif comprend en outre une unité (15) d'adaptation de la forme de la zone conçue pour faire varier automatiquement la forme de la au moins une zone en fonction de la forme de l'objet enfermé.

19. Dispositif suivant l'une quelconque des revendications 11 à 18, dans lequel au moins l'une des zones (19, 170) dures enferme au moins une partie d'un outil et la mémoire (12) pour mémoriser des données est conçue pour mémoriser des données obtenues en définissant deux ou plusieurs zones dures en trois dimensions de formes variables enfermant l'outil et l'unité (15) d'adaptation de zone est conçue pour recevoir des informations sur l'état de l'outil et pour faire varier automatiquement la forme de la au moins une zone dure enfermant au moins une partie de l'outil en fonction de l'état de l'outil et des zones dures mémorisées de formes variables.
